# EUROPÄISCHE PATENTSCHRIFT

(11) **EP 1 393 293 B1**
(45) Veröffentlichungstag und Bekanntmachung des Hinweises auf die Patenterteilung: **17.11.2010**
(21) Anmeldenummer: 01919429.9
(22) Anmeldetag: 04.04.2001
(51) Int. Cl.: G09G 3/32

(54) **ALTERUNGSKOPENSATION BEI OLED-DISPLAYS**
AGING COMPENSATION IN OLED DISPLAYS
COMPENSATION DU VIEILLISSEMENT DANS DES ECRANS A DIODES ELECTROLUMINESCENTES ORGANIQUES (OLED)

(43) Veröffentlichungstag der Anmeldung: 03.03.2004
(73) Patentinhaber: SIEMENS AKTIENGESELLSCHAFT, 80333 München (DE)
(72) Erfinder: WERNER, Marco, 81475 München (DE)
(86) Internationale Anmeldenummer: PCT/EP2001/003847
(87) Internationale Veröffentlichungsnummer: WO 2002/082416

(56) Entgegenhaltungen:
- EP-A- 0 923 067
- WO-A-01/20591
- WO-A2-01/63587
- US-A- 5 493 183
- US-A- 5 949 194

## Beschreibung

Die Erfindung betrifft ein Verfahren gemäß dem einzigen Patentanspruch.

Unter Verwendung der organischen LED-Technologie werden die sogenannten OLED-Displays hergestellt. Zukünftig werden diese Displays als Anzeigeeinrichtungen in vielen Anwendungsbereichen Verwendung finden, so zum Beispiel bei PCs, persönlichen digitalen Assistenten (PDA), mobilen Kommunikations- und Datenverarbeitungsgeräten. Weiter können diese Displays auch bei Stereoanlagen, Fernsehern und als Anzeigefelder bei Werkzeugmaschinen und Ähnlichem mehr eingesetzt werden.

Ein Nachteil der OLED-Displays ist deren nachlassende Helligkeit mit steigender Betriebsdauer, der prinzipiell mit einer höheren Ansteuerspannung ausgeglichen werden kann. Bei Matrixdisplays für Bild- oder Videowiedergabe wird jedes einzelne Bildpixel beziehungsweise jeder einzelne Bildpunkt individuell in Helligkeit und Leuchtzeit angesteuert. Hierdurch ergeben sich sogenannte Einbrenneffekte, die nach einer gewissen Betriebsdauer als dunkle Schatten bei der Wiedergabe gleichfarbiger Flächen beobachtbar sind. Die Alterung ist bei farbigen Displays auch noch von der Farbe beziehungsweise den einzelnen Farbpunkten abhängig.

Dokument WO01/63587, das unter Art. 54(3) EPÜ fallt, zeigt ein OLED-Display, bei dem für jedes Pixel Parameter einer Strom-Helligkeit-Kennlinie gespeichert und gemäß dem durch die OLEDs geflossenen Strom aktualisiert werden. Für jedes Pixel wird der treibende Strom gemäß der entsprechenden Kennlinie eingestellt.

Der Erfindung liegt die Aufgabe zugrunde, bei OLED-Displays eine bessere Bildwiedergabe zu erzielen.

Diese Aufgabe wird erfindungsgemäß durch die im Patentanspruch 1 angegebenen Merkmale gelöst.

Im Folgenden wird die Erfindung anhand eines in der Zeichnung dargestellten Ausführungsbeispieles beschrieben. Dabei zeigen:
Figur 1 ein Diagramm zur Veranschaulichung der nachlassenden Helligkeit dieser Displays,
Figur 2 ein Diagramm zur Kompensation dieses Helligkeitsabfalles und
Figur 3 ein Blockschaltbild zu einer möglichen Realisierung.

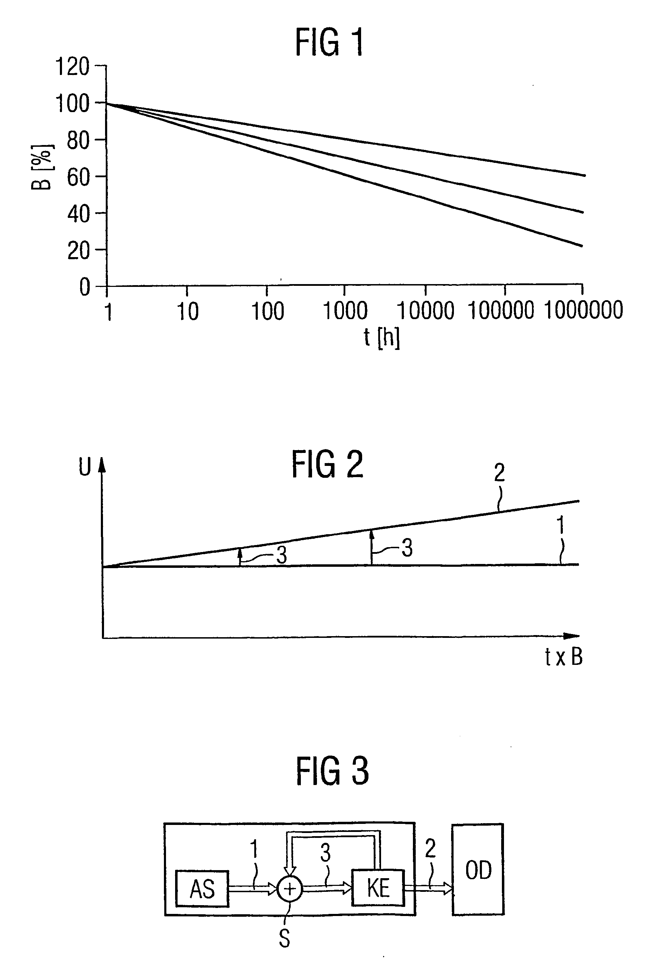

In Figur 1 ist in einem Diagramm die Helligkeit B in Prozent gegenüber der Betriebszeit t in Stunden dargestellt. Die oberste Linie entspricht dabei der Farbe rot, die mittlere Linie der Farbe grün oder weiss, und die unterste Linie der Farbe blau. Nach einer Million Stunden ist die Helligkeit B ausgehend von 100 % bei allen Farben auf etwa 65 % für rot , auf etwa 45 % für grün beziehungsweise weiss, und auf etwa 20 % für blau abgefallen.

Bei dem erfindungsgemäßen Verfahren wird die Materialalterung für jedes einzelne Pixel beziehungsweise bei Farbdisplays für jeden einzelnen Bildpunkt ausgewertet und eine Kompensation des Helligkeitsabfalles für jeden einzelnen Bildpunkt durchgeführt. Ein Pixel weist, bei Farbdisplays, im allgemeinen drei Bildpunkte mit den Farben rot, grün und blau auf.

In Figur 2 ist das Grundprinzip des erfindungsgemäßen Verfahrens dargestellt. Hierzu ist eine Ansteuerspannung U gegenüber dem Produkt aus der Betriebszeit t und einer Helligkeit B aufgetragen. Hierbei wird im Prinzip die in einem Zeitintervall eingestellte Helligkeit aufintegriert. Die Helligkeit ist dabei durch die am Pixel anliegende Ansteuerspannung (siehe Bezugszeichen 1 in Figur 3) bestimmt.

In der weiteren Ausführung wird auch auf die Figur 3 Bezug genommen. Zur pixelweisen Ansteuerung des OLED-Displays OD beziehungsweise eines solchen Matrixdisplays wird jedes einzelne Pixel mit einer Ansteuerspannung 1 beaufschlagt, die durch einen Bildinhalt vorgegeben ist. Diese Ansteuerspannung 1 wird beispielsweise von einer Ansteuerschaltung AS letztlich an das Display OD gegeben.

Erfindungsgemäß wird für jeden Bildpunkt eine Kompensationsspannung 3 ermittelt. Die Kompensationsspannung 3 ist in einem ersten Schritt durch die Betriebszeit t beziehungsweise Betriebsdauer dieses Punktes bestimmt. Die Betriebszeit t wird in einer Kompensationseinrichtung KE erfasst. Die Kompensationsspannung 3 wird zur-Ansteuerspannung 1 gemäß Bildinhalt hinzuaddiert. Dies geschieht in einer Summationsschaltung S.

Jeder Punkt des OLED-Displays OD wird also letztlich mit einer resultierenden Ansteuerspannung 2 angesteuert, die durch die Summe aus der Ansteuerspannung 1 gemäß Bildinhalt und der Kompensationsspannung 3 gegeben ist. Bei einer Ausgestaltung der Erfindung wird die Kompensationsspannung 3 nicht nur durch die Betriebsdauer t, sondern durch das Produkt aus der Betriebsdauer t und der jeweils angelegten Helligkeit B ermittelt.

Der alterungsbedingte Helligkeitsabfall wird dadurch ausgeglichen, dass die Betriebsdauer beziehungsweise die Betriebsdauer und die Helligkeit B jedes einzelnen Pixels beziehungsweise Bildpunktes gemessen wird. Dies geschieht in der Kompensationseinrichtung KE, die in einem sogenannten Displaycontroller angeordnet sein kann. Man erhält somit für jeden einzelnen Bildpunkt einen Wert, der die Alterung dieses Punktes repräsentiert. Mit dieser Alterungsinformation wird die Kompensationsspannung 3 berechnet. Durch die Addition der Kompensationsspannung 3 zur Ansteuerspannung 1 gemäß Bildinhalt wird für jedes Pixel beziehungsweise für jeden farbigen Bildpunkt die gewünschte Nennhelligkeit erreicht.

## Patentansprüche

1. Verfahren zur pixelweisen beziehungsweise punktweisen Ansteuerung eines OLED-Displays (OD) mit einer durch einen Bildinhalt vorgegebenen Ansteuerspannung (1),
**dadurch gekennzeichnet, dass** zumindest eine Betriebsdauer (t) zu jedem Punkt erfasst wird, eine durch die Betriebsdauer (t) bestimmte Kompensationsspannung (3) ermittelt und zur Ansteuerspannung (1) addiert wird.

2. Verfahren nach Anspruch 1,
**dadurch gekennzeichnet, dass** eine Verknüpfung aus der Betriebsdauer (t) und einer Helligkeit (B) zu jedem Punkt erfasst wird,
eine durch die Verknüpfung bestimmte Kompensationsspannung (3) ermittelt und zur Ansteuerspannung (1) addiert wird.

## Claims

1. Method for the pixel-by-pixel or point-by-point driving of an OLED display (OD) with a drive voltage (1) predefined by an image content,
**characterized in that**
at least one operating duration (t) is detected for each point, and a compensation voltage (3) determined by means of the operating duration (t) is determined and added to the drive voltage (1).

2. Method according to Claim 1,
**characterized in that**
a combination of the operating duration (t) and a brightness (B) is detected for each point, and
a compensation voltage (3) determined by means of the combination is determined and added to the drive voltage (1).

## Revendications

1. Procédé de commande pixel par pixel ou point par point d'un affichage OLED ( OD ) par une tension ( 1 ) de commande prescrite par un contenu d'images,
**caractérisé en ce que**
on détecte en chaque point au moins une durée ( t ) de fonctionnement, on détermine une tension ( 3 ) de compensation déterminée par la durée ( t ) de fonctionnement et on l'ajoute à la tension ( 1 ) de commande.

2. Procédé suivant la revendication 1,
**caractérisé en ce que**
on détecte en chaque point une combinaison de la durée ( t ) de fonctionnement et d'une brillance ( B ),
on détermine une tension ( 3 ) de compensation déterminée par la combinaison et on l'ajoute à la tension ( 1 ) de commande.
